# EUROPÄISCHE PATENTSCHRIFT

(11) **EP 3 414 142 B1**
(45) Veröffentlichungstag und Bekanntmachung des Hinweises auf die Patenterteilung: **29.04.2020**
(21) Anmeldenummer: 17709023.0
(22) Anmeldetag: 01.03.2017
(51) Int. Cl.: B61L 23/04, B61L 27/00, G06K 9/00

(54) **VERFAHREN UND SYSTEM ZUR VALIDIERUNG EINES HINDERNISERKENNUNGSSYSTEMS**
METHOD AND SYSTEM FOR VALIDATING AN OBSTACLE IDENTIFICATION SYSTEM
PROCÉDÉ ET SYSTÈME DE VALIDATION D'UN SYSTÈME DE DÉTECTION D'OBSTACLES

(30) Priorität: 31.03.2016 DE 102016205392
(43) Veröffentlichungstag der Anmeldung: 19.12.2018
(73) Patentinhaber: Siemens Mobility GmbH, 81739 München (DE)
(72) Erfinder: BRABAND, Jens, 38106 Braunschweig (DE); EVERS, Bernhard, 38116 Braunschweig (DE)
(86) Internationale Anmeldenummer: PCT/EP2017/054757
(87) Internationale Veröffentlichungsnummer: WO 2017/167528

(56) Entgegenhaltungen:
- EP-A1- 1 868 051
- EP-A2- 2 546 778
- WO-A1-2004/028881
- WO-A1-2015/015494
- WO-A2-2014/183948
- DE-A1-102008 001 256

## Beschreibung

Beim autonomen Fahren auf durch Mischverkehr geprägten Strecken, die von Güterzügen und Hochgeschwindigkeitszügen befahren werden (Hauptstrecken), kommt der Hinderniserkennung eine wichtige Bedeutung zu.

Bekannt sind Hinderniserkennungssysteme mit fahrzeugseitiger Hinderniserkennungsanordnung und/oder streckenseitiger Hinderniserkennungsanordnung.

Die Erfindung betrifft ein Verfahren und ein System zur Validierung eines Hinderniserkennungssystems.

Aus der Druckschrift EP 2 546 778 A2 ist ein Verfahren zum Bewerten einer Funktionstüchtigkeit einer Objekterkennungseinrichtung eines Kraftfahrzeugs mittels einer Kamera-Simulationseinrichtung bekannt. Dabei werden von einer Kamera erzeugte Referenzbilddaten mit von der Kamera-Simulationseinrichtung erzeugten Simulationsbilddaten verglichen. Erfüllt eine Gesamtheit von Vergleichswerten, welche im Ergebnis dieses Vergleiches erzeugt wurden, ein vorbestimmtes Überprüfungskriterium, so wird die Kamera-Simulationseinrichtung gegebenenfalls für die Verwendung bei der Bewertung der Funktionstüchtigkeit der Objekterkennungseinrichtung bereitgestellt. Außerdem ist aus dieser Druckschrift eine Vorrichtung zum Überprüfen einer Eignung einer Kamera-Simulationseinrichtung für eine Verwendung bei einer Bewertung einer Funktionstüchtigkeit einer Objekterkennungseinrichtung eines Kraftfahrzeugs bekannt.

Der Erfindung liegt die Aufgabe zu Grunde, ein Verfahren und ein System zur Validierung eines Hinderniserkennungssystems derart auszubilden, dass ein Nachweis geführt werden kann, dass durch das Hinderniserkennungssystem Hindernisse mindestens so sicher erkannt werden wie durch einen Fahrer.

Gelöst wird diese Aufgabe mit einem Verfahren nach Anspruch 1, bei dem zur Bildung von Fahrszenen stochastische Kombinationen vorgegebener Verteilungen von Submodellen bereitgestellt werden, die bereitgestellten Kombinationen einerseits für die Durchführung einer Simulationsstudie einer Simulation durch einen Simulator und andererseits einer automatischen Verarbeitung durch einen Hinderniserkennungsalgorithmus des Hinderniserkennungssystems unterzogen werden und ein Ergebnis einer mittels des Simulators durchgeführten Simulationsstudie und ein Ergebnis der automatischen Verarbeitung automatisch auf Übereinstimmung getestet werden.

Gelöst wird diese Aufgabe auch durch ein System nach Anspruch 9, welches geeignet ausgebildet ist, zur Bildung von Fahrszenen stochastische Kombinationen vorgegebener Verteilungen von Submodellen bereitzustellen, die bereitgestellten Kombinationen einerseits für die Durchführung einer Simulationsstudie einer Simulation durch einen Simulator und andererseits einer automatischen Verarbeitung durch einen Hinderniserkennungsalgorithmus des Hinderniserkennungssystems zu unterziehen und ein Ergebnis einer mittels des Simulators durchgeführten Simulationsstudie und ein Ergebnis der automatischen Verarbeitung automatisch auf Übereinstimmung zu testen.

Der Vorteil des erfindungsgemäßen Verfahrens und das erfindungsgemäße Systems besteht in der Automatisierung der Validierung durch die Kombination der verschiedenen Submodelle sowie dem automatischen Abgleich des Ergebnisses der Simulationsstudie mit dem Ergebnis der automatischen Verarbeitung durch den Hinderniserkennungsalgorithmus (also mit einem technischen Validierungsergebnis bzw. bei notwenigen Verbesserungen des Hinderniserkennungsalgorithmus mit weiteren technischen Validierungsergebnissen). Dies erlaubt eine erhebliche Verkürzung der Validierung bzw. eine erhebliche Verringerung des Aufwandes der Validierung.

Verfahrensgemäß wird es als vorteilhaft angesehen, wenn die Submodelle in einem kombinierten Modell stochastisch kombiniert und die stochastischen Kombinationen von dem kombinierten Modell bereitstellt werden. - Es ist also vorteilhaft, ein kombiniertes Modell vorzusehen, in dem die Submodelle stochastisch kombiniert sind und welches geeignet ausgebildet ist, die stochastischen Kombinationen bereitzustellen.

Verfahrensgemäß wird es weiterhin als vorteilhaft angesehen, wenn bei der Simulation die Fahrszenen durch den Simulator grafisch, insbesondere als virtuelle Realität, dargestellt werden. Entsprechend ist es systemgemäß vorteilhaft, wenn der Simulator geeignet ausgebildet ist, bei der Simulation die Fahrszenen grafisch, insbesondere als virtuelle Realität, darzustellen.

Verfahrensgemäß wird es außerdem als vorteilhaft angesehen, wenn als Ergebnis der Simulationsstudie, bei welcher die Submodelle und/oder das kombinierte Modell mittels an dem Simulator von Testpersonen, insbesondere Triebfahrzeugführern, durchgeführten Simulationsfahrten validiert und angewendet werden, ein die Hinderniserkennungsfähigkeit der Testpersonen repräsentierendes erstes Ergebnis ausgegeben wird - wenn also das System geeignet ausgebildet ist, als Ergebnis der Simulationsstudie, bei welcher die Submodelle und/oder das kombinierte Modell mittels an dem Simulator von Testpersonen, insbesondere Triebfahrzeugführern, durchgeführten Simulationsfahrten validiert und angewendet werden, ein die Hinderniserkennungsfähigkeit der Testpersonen repräsentierendes erstes Ergebnis auszugeben.

Ferner wird es verfahrensgemäß als vorteilhaft angesehen, wenn als Ergebnis der automatischen Verarbeitung ein die Hinderniserkennungsfähigkeit des Hinderniserkennungsalgorithmus repräsentierendes zweites Ergebnis ausgegeben wird - wenn also das System geeignet ausgebildet ist, als Ergebnis der automatischen Verarbeitung ein die Hinderniserkennungsfähigkeit des Hinderniserkennungsalgorithmus repräsentierendes zweites Ergebnis auszugeben.

Vorzugsweise kommen als Submodelle ein Streckenmodell, ein Wetter- und Umgebungsmodell und ein Hindernismodell zum Einsatz.

Darüber hinaus ist es vorteilhaft, wenn weitere vorgegebene Verteilungen eines weiteren Submodells der automatischen Verarbeitung durch den Hinderniserkennungsalgorithmus unterzogen werden. Als das weitere Submodell kann ein Modell für die Leistungsfähigkeit von Sensoren des Hinderniserkennungssystems zum Einsatz kommen.

Die Erfindung wird im Weiteren anhand der Figuren näher erläutert. Dabei zeigen die
Figur 1 ein kombiniertes Modell, in dem Submodelle stochastisch kombiniert sind und die
Figur 2 ein erfindungsgemäßes System zur Validierung eines Hinderniserkennungssystems mit einem Simulator und mit einer Validierungseinrichtung, die einen zu validierenden Hinderniserkennungsalgorithmus des Hinderniserkennungssystems bereitstellt.

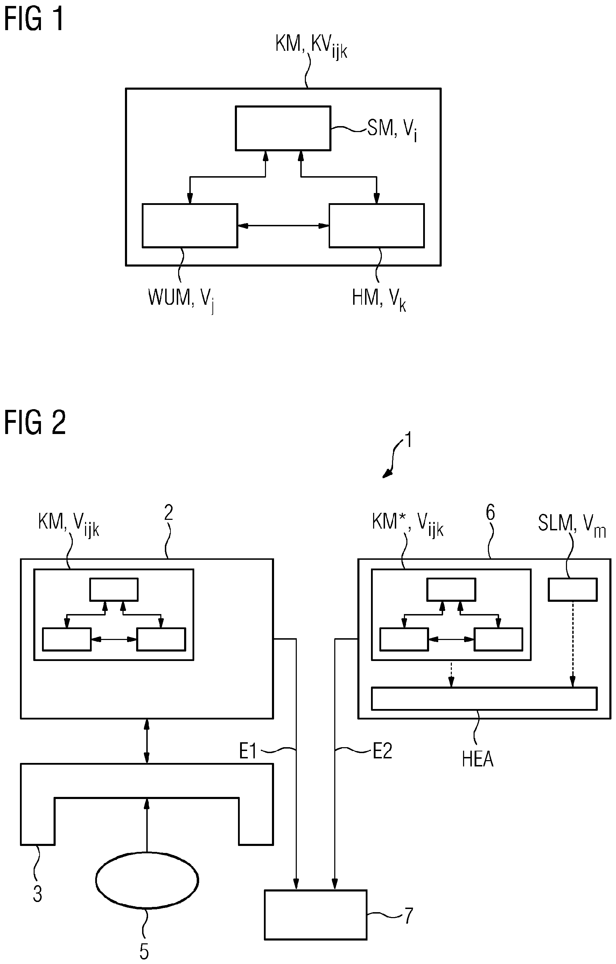

Gemäß Figur 1 wird ein kombiniertes Modell KM bereitgestellt, in welchem drei Submodelle SM, WUM und HM stochastisch kombiniert sind.

Das kombinierte Modell KM stellt zur Bildung von Fahrszenen stochastische Kombinationen KVᵢⱼₖ von vorgegebenen Verteilungen Vᵢ, Vⱼ, Vₖ der Submodelle SM, WUM und HM bereit.

Bei den Submodellen handelt es sich um ein Streckenmodell SM mit den vorgegebenen Verteilungen Vᵢ, ein Wetter- und Umgebungsmodell WUM mit den vorgegebenen Verteilungen Vⱼ und ein Hindernismodell HM mit den vorgegebenen Verteilungen Vₖ.

Das Streckenmodell SM entspricht einem Musterstreckenmodell heute bekannter fortschrittlicher - also hochkomplexer quasi der Natur nahe kommender - Simulatoren.

In dem Wetter- und Umgebungsmodell WUM werden glaubwürdige aber ansonsten eher schwierige Kombinationen von Tageszeit, Wetter etc. definiert, aber auch Kombinationen temporärer betrieblicher Umstände wie beispielsweise Langsamfahrstellen.

Das Hindernismodell HM besteht aus Modellen aller relaistisch anzunehmenden Hindernisse, wie beispielsweise Bäume, Tiere oder Menschen.

Gemäß Figur 2 wird neben dem kombinierten Modell KM auch ein weiteres Submodell SLM für die Leistungsfähigkeit von Sensoren des Hinderniserkennungssystems, welches im Weiteren auch als Sensorleistungsfähigkeitsmodell oder kurz Sensormodell bezeichnet ist, bereitgestellt.

Das kombinierte Modell KM bildet mit seinen Kombinationen KVᵢⱼₖ der vorgegebenen Verteilungen Vᵢ, Vⱼ, Vk der Submodelle SM, WUM, HM bei dem erfindungsgemäßen System 1 das Simulationsmodell eines Simulators 2, der mit einer Benutzeroberfläche 3 versehen ist Der Simulator 2 stellt anhand von Berechnungen am kombinierten Modell KM die Fahrszenen grafisch als Computergrafik bzw. als Virtuelle Realität dar. Die Virtuelle Realität erlaubt dabei über die Benutzeroberfläche 3 des Simulators 2 eine Interaktion einer Testpersonen 5 mit den simulierten Fahrszenen. Somit können an dem Simulator im Rahmen einer Simulationsstudie von verschiedenen Testpersonen, insbesondere von verschiedenen geschulten Triebfahrzeugführern (Fahrer), Testfahrten am Simulator 2, 3 durchgeführt werden. Diese Testfahrten werden durchgeführt, um die Submodelle SM, WUM, HM und/oder das kombinierte Modell KM zu validieren und dann anzuwenden und um dann durch den Simulator 2, 3 als Ergebnis der Simulationsstudie ein zu Testzwecken vorgesehenes erstes Ergebnis zu generieren und auszugeben, das die Hinderniserkennungsfähigkeit der Testpersonen 5 repräsentiert.

Das erfindungsgemäße System weist zusätzlich zu dem Simulator 2 mit seiner Benutzeroberfläche 3 auch eine Validierungseinrichtung 6 auf. Die Validierungseinrichtung 6 stellt neben einer datentechnisch umgerechneten Form KM* des kombinierten Modells KM und dem weiteren Submodell SLM mit seinen Verteilungen Vₘ auch einen zu validierenden Hinderniserkennungsalgorithmus HEA des Hinderniserkennungssystems bereit.

Die bereitgestellten Kombinationen KVᵢⱼₖ des kombinierten Modells KM bzw. der umgerechneten Form KM* des kombinierten Modells, die im Weiteren auch als feste Kombinationen bezeichnet sind, werden also einerseits für die Durchführung der Simulationsstudie der Simulation durch den Simulator 2, 3 und andererseits in der Validierungseinrichtung einer automatischen Verarbeitung durch den Hinderniserkennungsalgorithmus HEA des Hinderniserkennungssystems unterzogen.

Neben dem Ergebnis der Simulationsstudie, das als das die Hinderniserkennungsfähigkeit der Testpersonen 5 repräsentierendes erstes Ergebnis E1 von dem Simulator 2, 3 ausgegeben wird, wird durch die Validierungseinrichtung 6 als Ergebnis der automatischen Verarbeitung das die Hinderniserkennungsfähigkeit des Hinderniserkennungsalgorithmus HEA repräsentierendes zweites Ergebnis E2 ausgegeben.

Darüber hinaus umfasst das erfindungsgemäße System eine Testeinrichtung 7, die mit dem Simulator 2, 3 und mit der Validierungseinrichtung 6 verbunden ist und mittels derer das Ergebnis der mittels des Simulators 2, 3 durchgeführten Simulationsstudie und das Ergebnis der mittels der Validierungseinrichtung 6 durchgeführten automatischen Verarbeitung automatisch auf Übereinstimmung getestet werden.

Mit anderen Worten werden also im kombinierten Modell KM die Submodelle SM, WUM, HM stochastisch kombiniert, d. h. konkrete Simulationsbedingungen werden aufgrund der vorgegebenen Verteilungen ermittelt. Zur Validierung der Modelle wird eine statistisch repräsentative und signifikante Stichprobe von Testpersonen (Triebfahrzeugführern) zu Simulationsfahrten herangezogen. Dabei werden sie insbesondere Ausnahmesituationen mit Hindernissen oder ungewöhnlichen Umständen unterzogen, die aber aus den festen Verteilungen ausgewählt werden.

Als erstes Ergebnis E1 erhält man statistische Verteilungen für die Hinderniserkennungsfähigkeit der Fahrer, gemittelt über alle festen Verteilungen. Es ist zu erwarten, dass diese Ergebnisse besser als in der Realität ausfallen, da die Fahrer wissen, dass sie häufiger als in der Realität Hindernisse erkennen müssen.

Zur Validierung des technischen Hinderniserkennungssystems werden die Modelle SM, WUM und HM bzw. das kombinierte Modell KM nicht für einen Simulator verwendet, sondern sie werden datentechnisch zu der Form KM* so umgerechnet, dass der Hinderniserkennungsalgorithmus HEA direkt auf den errechneten Fahrszenen arbeiten kann. Dabei wird das Modell SLM für die Leistungsfähigkeit der Sensoren (z. B. Leistungsfähigkeit hinsichtlich Auflösung, Reichweite etc.) verwendet.

Dies bedeutet, dass man insbesondere den Hinderniserkennungsalgorithmus HEA automatisch testen kann und man erhält für den Hinderniserkennungsalgorithmus HEA in Kombination mit den Verteilungen des Sensormodells SLM ebenso statistische Verteilungen für die Hinderniserkennungsfähigkeit des Hinderniserkennungsalgorithmus HEA.

Mittels der Testeinrichtung 7 wird dann, insbesondere anhand bekannter statistischen Verfahren wie beispielsweise dem Kolmogorov-Smirnov-Test, getestet, ob die technische Hinderniserkennung - also insbesondere der Hinderniserkennungsalgorithmus HEA mindestens genauso sicher ist, wie der menschlichen Fahrer.

## Patentansprüche

1. Verfahren zur Validierung eines Hinderniserkennungssystems, bei dem
- zur Bildung von Fahrszenen stochastische Kombinationen (KVᵢⱼₖ) vorgegebener Verteilungen (Vᵢ, Vⱼ, Vₖ) von Submodellen (SM, WUM,HM) bereitgestellt werden,
- die bereitgestellten Kombinationen (KVᵢⱼₖ) einerseits für die Durchführung einer Simulationsstudie einer Simulation durch einen Simulator (2,3) und andererseits einer automatischen Verarbeitung durch einen Hinderniserkennungsalgorithmus (HEA) des Hinderniserkennungssystems unterzogen werden und
- ein Ergebnis (E1) einer mittels des Simulators (2,3) durchgeführten Simulationsstudie und ein Ergebnis (E2) der automatischen Verarbeitung automatisch auf Übereinstimmung getestet werden.

2. Verfahren nach Anspruch 1,
**dadurch gekennzeichnet, dass**
die Submodelle (SM, WUM,HM) in einem kombinierten Modell (KM) stochastisch kombiniert und die stochastischen Kombinationen (KVᵢⱼₖ) von dem kombinierten Modell (KM) bereitstellt werden.

3. Verfahren nach einem der Ansprüche 1 oder 2,
**dadurch gekennzeichnet, dass**
bei der Simulation die Fahrszenen durch den Simulator (2,3) grafisch, insbesondere als virtuelle Realität, dargestellt werden.

4. Verfahren nach einem der Ansprüche 1 bis 3,
**dadurch gekennzeichnet, dass**
als Ergebnis der Simulationsstudie, bei welcher die Submodelle (SM, WUM, HM) und/oder das kombinierte Modell (KM) mittels an dem Simulator (2,3) von Testpersonen (5), insbesondere Triebfahrzeugführern, durchgeführten Simulationsfahrten validiert und angewendet werden, ein die Hinderniserkennungsfähigkeit der Testpersonen (5) repräsentierendes erstes Ergebnis (E1) ausgegeben wird.

5. Verfahren nach einem der Ansprüche 1 bis 4,
**dadurch gekennzeichnet, dass**
als Ergebnis der automatischen Verarbeitung ein die Hinderniserkennungsfähigkeit des Hinderniserkennungsalgorithmus (HEA) repräsentierendes zweites Ergebnis (E2) ausgegeben wird.

6. Verfahren nach einem der Ansprüche 1 bis 5,
**dadurch gekennzeichnet, dass**
als Submodelle ein Streckenmodell (SM), ein Wetter- und Umgebungsmodell (WUM) und ein Hindernismodell (HM) verwendet werden.

7. Verfahren nach einem der Ansprüche 1 bis 6
**dadurch gekennzeichnet, dass** weitere vorgegebene Verteilungen (Vₘ) eines weiteren Submodells (SLM) der automatischen Verarbeitung durch den Hinderniserkennungsalgorithmus (HEA) unterzogen werden.

8. Verfahren nach Anspruch 7
**dadurch gekennzeichnet, dass**
als das weitere Submodell ein Modell (SLM) für die Leistungsfähigkeit von Sensoren des Hinderniserkennungssystems verwendet wird.

9. System (1) zur Validierung eines Hinderniserkennungssystems, welches geeignet ausgebildet ist,
- zur Bildung von Fahrszenen stochastische Kombinationen (KVᵢⱼₖ) vorgegebener Verteilungen (Vᵢ, Vⱼ, Vₖ) von Submodellen (SM, WUM, HM) bereitzustellen,
- die bereitgestellten Kombinationen (KVᵢⱼₖ) einerseits für die Durchführung einer Simulationsstudie einer Simulation durch einen Simulator (2, 3) und andererseits einer automatischen Verarbeitung durch einen Hinderniserkennungsalgorithmus (HEA) des Hinderniserkennungssystems zu unterziehen und
- ein Ergebnis (E1) einer mittels des Simulators (2, 3) durchgeführten Simulationsstudie und ein Ergebnis (E2) der automatischen Verarbeitung automatisch auf Übereinstimmung zu testen.

10. System (1) nach Anspruch 9,
**gekennzeichnet durch**
ein kombiniertes Modell (KM), in dem die Submodelle (SM, WUM, HM) stochastisch kombiniert sind und welches geeignet ausgebildet ist, die stochastischen Kombinationen (KVᵢⱼₖ) bereitzustellen.

11. System (1) nach einem der Ansprüche 9 oder 10,
**dadurch gekennzeichnet, dass**
der Simulator (2, 3) geeignet ausgebildet ist, bei der Simulation die Fahrszenen grafisch, insbesondere als virtuelle Realität, darzustellen.

12. System (1) nach einem der Ansprüche 9 bis 11,
**dadurch gekennzeichnet, dass**
es geeignet ausgebildet ist, als Ergebnis der Simulationsstudie, bei welcher die Submodelle (SM, WUM, HM) und/oder das kombinierte Modell (KM) mittels an dem Simulator (2, 3) von Testpersonen (5), insbesondere Triebfahrzeugführern, durchgeführten Simulationsfahrten validiert und angewendet werden, ein die Hinderniserkennungsfähigkeit der Testpersonen (5) repräsentierendes erstes Ergebnis (E1) auszugeben.

13. System (1) nach einem der Ansprüche 9 bis 12,
**dadurch gekennzeichnet, dass**
es geeignet ausgebildet ist, als Ergebnis der automatischen Verarbeitung ein die Hinderniserkennungsfähigkeit des Hinderniserkennungsalgorithmus (HEA) repräsentierendes zweites Ergebnis (E2) auszugeben.

14. System (1) nach einem der Ansprüche 9 bis 13,
**dadurch gekennzeichnet, dass**
es als Submodelle ein Streckenmodell (SM), ein Wetter- und Umgebungsmodell (WUM) und ein Hindernismodell (HM).

15. System (1) nach einem der Ansprüche 9 bis 14
**dadurch gekennzeichnet, dass**
es geeignet ausgebildet ist, weitere vorgegebene Verteilungen (Vₘ) eines weiteren Submodells (SLM) der automatischen Verarbeitung durch den Hinderniserkennungsalgorithmus (HEA) zu unterziehen.

16. System (1) nach Anspruch 15
**dadurch gekennzeichnet, dass**
das weitere Submodell als ein Modell (SLM) für die Leistungsfähigkeit von Sensoren bereitgestellt ist.

## Claims

1. Method for validating an obstacle identification system, in which
- stochastic combinations (KVᵢⱼₖ) of predetermined distributions (Vᵢ, Vⱼ, Vₖ) from submodels (SM, WUM, HM) are provided for the purpose of forming driving scenarios,
- the provided combinations (KVᵢⱼₖ) are subjected both to simulation by a simulator (2, 3) in order to perform a simulation study and to automatic processing by an obstacle identification algorithm (HEA) of the obstacle identification system, and
- a result (E1) of a simulation study performed by the simulator (2, 3) and a result (E2) of the automatic processing are automatically tested for agreement.

2. Method according to claim 1,
**characterised in that**
the submodels (SM, WUM, HM) are stochastically combined in a combined model (KM) and the stochastic combinations (KVᵢⱼₖ) from the combined model (KM) are provided.

3. Method according to one of claims 1 or 2,
**characterised in that**
the driving scenarios are displayed graphically by the simulator (2,3), in particular as virtual reality, during the simulation.

4. Method according to one of claims 1 to 3,
**characterised in that**
as a result of the simulation study during which the submodels (SM, WUM, HM) and/or the combined model (KM) are validated and applied by means of simulation runs that are performed at the simulator (2, 3) by test users (5), in particular locomotive drivers, a first result (E1) representing the obstacle identification capability of the test users (5) is output.

5. Method according to one of claims 1 to 4,
**characterised in that**
as a result of the automatic processing, a second result (E2) representing the obstacle identification capability of the obstacle identification algorithm (HEA) is output.

6. Method according to one of claims 1 to 5,
**characterised in that**
a line section model (SM), a weather and environment model (WUM) and an obstacle model (HM) are used as submodels.

7. Method according to one of claims 1 to 6
**characterised in that**
further predetermined distributions (Vₘ) of a further submodel (SLM) are subjected to the automatic processing by the obstacle identification algorithm (HEA).

8. Method according to claim 7
**characterised in that**
a model (SLM) for the performance capability of sensors of the obstacle identification system is used as the further submodel.

9. System (1) for validating an obstacle identification system, which is suitably designed
- to provide stochastic combinations (KVᵢⱼₖ) of predetermined distributions (Vᵢ, Vⱼ, Vₖ) from submodels (SM, WUM, HM) for the purpose of forming driving scenarios,
- to subject the provided combinations (KVᵢⱼₖ) both to simulation by a simulator (2, 3) in order to perform a simulation study and to automatic processing by an obstacle identification algorithm (HEA) of the obstacle identification system, and
- to automatically test a result (E1) of a simulation study performed by the simulator (2, 3) and a result (E2) of the automatic processing for agreement.

10. System (1) according to claim 9,
**characterised by**
a combined model (KM), in which the submodels (SM, WUM, HM) are stochastically combined and which is suitably designed to provide the stochastic combinations (KVᵢⱼₖ).

11. System (1) according to one of claims 9 or 10,
**characterised in that**
the simulator (2, 3) is suitably designed to display the driving scenarios graphically, in particular as virtual reality, during the simulation.

12. System (1) according to one of claims 9 to 11,
**characterised in that**
it is suitably designed to output, as a result of the simulation study during which the submodels (SM, WUM, HM) and/or the combined model (KM) are validated and applied by means of simulation runs that are performed at the simulator (2, 3) by test users (5), in particular locomotive drivers, a first result (E1) representing the obstacle identification capability of the test users (5).

13. System (1) according to one of claims 9 to 12,
**characterised in that**
it is suitably designed to output, as a result of the automatic processing, a second result (E2) representing the obstacle identification capability of the obstacle identification algorithm (HEA).

14. System (1) according to one of claims 9 to 13,
**characterised in that**
it uses a line section model (SM), a weather and environment model (WUM) and an obstacle model (HM) as submodels.

15. System (1) according to one of claims 9 to 14
**characterised in that**
it is suitably designed to submit further predetermined distributions (Vₘ) of a further submodel (SLM) to the automatic processing by the obstacle identification algorithm (HEA).

16. System (1) according to claim 15
**characterised in that**
the further submodel is provided as a model (SLM) for the performance capability of sensors.

## Revendications

1. Procédé de validation d'un système de détection d'obstacles, dans lequel
- pour former des scènes de circulation, on se procure des combinaisons (KVᵢⱼₖ) stochastiques de répartitions (Vᵢ, Vⱼ, Vₖ) données à l'avance de sous-modèles (SM, WUM, HM),
- on soumet les combinaisons (KVᵢⱼₖ) que l'on s'est procurées, d'une part pour effectuer une étude de simulation à une simulation par un simulateur (2, 3) et d'autre part à un traitement automatique par un algorithme (HEA) de détection d'obstacles du système de détection d'obstacles et
- on teste automatiquement la coïncidence d'un résultat (E1) d'une étude de simulation effectuée au moyen du simulateur (2, 3) et d'un résultat (2) du traitement automatique.

2. Procédé suivant la revendication 1,
**caractérisé en ce que**
l'on combine stochastiquement les sous-modèles (SM, WUM, HM) en un modèle (KM) combiné et on se procure les combinaisons (KVᵢⱼₖ) stochastiques par le modèle (KM) combiné.

3. Procédé suivant l'une des revendications 1 ou 2,
**caractérisé en ce que**
dans la simulation, on représente les scènes de circulation par le simulateur (2, 3) graphiquement, notamment en réalité virtuelle.

4. Procédé suivant l'une des revendications 1 à 3,
**caractérisé en ce que**
l'on émet, comme résultat de la simulation, par lequel les sous-modèles (SM, WUM, HM) et/ou le modèle (KM) combiné sont validés et appliqués au moyen d'itinéraires de simulation effectués sur le simulateur (2, 3) par des personnes (5) de test, notamment des conducteurs de motrices, un premier résultat (E1) représentant l'aptitude à détecter un obstacle des personnes (5) de test.

5. Procédé suivant l'une des revendications 1 à 4,
**caractérisé en ce que**
l'on émet, comme résultat du traitement automatique, un deuxième résultat (E2) représentant l'aptitude à détecter un obstacle de l'algorithme (HEA) de détection d'obstacles.

6. Procédé suivant l'une des revendications 1 à 5,
**caractérisé en ce que**
l'on utilise comme sous-modèle un modèle (SM) de voie, un modèle (WUM) d'intempéries et d'environnement et un modèle (HM) d'obstacles.

7. Procédé suivant l'une des revendications 1 à 6,
**caractérisé en ce que**
l'on soumet d'autres répartitions (Vₘ) données à l'avance d'un autre sous-modèle (SLM) au traitement automatique par l'algorithme (HEA) de détection d'obstacles.

8. Procédé suivant la revendication 7,
**caractérisé en ce que**
l'on utilise, comme autre sous-modèle, un modèle (SLM) de l'efficacité de capteurs du système de détection d'obstacles.

9. Système (1) de validation d'un système de détection d'obstacles, qui est constitué de manière appropriée,
- pour mettre à disposition des combinaisons (KVᵢⱼₖ) stochastiques de répartitions (Vᵢ, Vⱼ, Vₖ) données à l'avance de sous-modèles (SM, WUM, HM), pour la formation de scènes de circulation,
- pour soumettre les combinaisons (KVᵢⱼₖ) que l'on s'est procurées, d'une part pour effectuer une étude de simulation, à une simulation par un simulateur (2, 3), et d'autre part à un traitement automatique par un algorithme (HEA) de détection d'obstacles du système de détection d'obstacles et
- pour tester automatiquement une coïncidence d'un résultat (E1) d'une étude de simulation effectuée au moyen du simulateur (2, 3), et un résultat (E2) du traitement automatique.

10. Système (1) suivant la revendication 9,
**caractérisé par**
un modèle (KM) combiné, dans lequel les sous-modèles (SM, WUM, HM) sont combinés stochastiquement et qui est constitué de manière appropriée pour procurer les combinaisons (KVᵢⱼₖ) stochastiques.

11. Système (1) suivant l'une des revendications 9 ou 10,
**caractérisé en ce que**
le simulateur (2, 3) est constitué de manière appropriée pour représenter, pour la simulation, les scènes de circulation graphiquement, notamment en réalité virtuelle.

12. Système (1) suivant l'une des revendications 9 à 11,
**caractérisé en ce qu'**
il est constitué de manière appropriée pour émettre, comme résultat de l'étude de simulation, dans laquelle les sous-modèles (SM, WUM, HM) et/ou le modèle (KM) combiné ont été validés et appliqués au moyen d'itinéraires de simulation effectués sur le simulateur (2, 3) par des personnes (5) de test, notamment des conducteurs de motrice, un premier résultat (E1) représentant l'aptitude à détecter un obstacle des personnes (5) de test.

13. Système (1) suivant l'une des revendications 9 à 12,
**caractérisé en ce qu'**
il est constitué de manière appropriée pour émettre, comme résultat du traitement automatique, un deuxième résultat (E2) représentant l'aptitude à détecter un obstacle de l'algorithme (HEA) de détection d'obstacles.

14. Système (1) suivant l'une des revendications 9 à 13,
**caractérisé en ce qu'**
il a, comme sous-modèles, un modèle (SM) de voie, un modèle (WUM) d'intempéries et d'environnement et un modèle (HM) d'obstacles.

15. Système (1) suivant l'une des revendications 9 à 14,
caractérisé en qu'
il est constitué de manière appropriée pour soumettre d'autres répartitions (Vₘ) données à l'avance d'un autre sous-modèle (SLM) au traitement automatique par l'algorithme (HEA) de détection d'obstacles.

16. Système (1) suivant la revendication 15,
**caractérisé en ce que**
l'autre sous-modèle est mis à disposition sous la forme d'un modèle (SLM) de l'efficacité de capteurs.
